# EUROPEAN PATENT SPECIFICATION

(11) **EP 2 265 377 B1**
(45) Date of publication and mention of the grant of the patent: **30.07.2014**
(21) Application number: 09720419.2
(22) Date of filing: 11.03.2009
(51) Int. Cl.: B03B 9/06, B09B 3/00, C10G 1/04, E01C 19/05

(54) **APPARATUS FOR RECOVERY AND RECYCLING OF BITUMINOUS AGGREGATES**
VORRICHTUNG ZUM RÜCKGEWINNEN UND RECYCELN VON BITUMENAGGREGATEN
APPAREIL POUR LA RÉCUPÉRATION ET LE RECYCLAGE D AGRÉGATS BITUMINEUX

(30) Priority: 12.03.2008 IT RM20080134
(43) Date of publication of application: 29.12.2010
(73) Proprietor: RE. Solution3 SRL, 33100 Udine (IT)
(72) Inventor: GALLI, Valerio, I-06050 Collazzone (PG) (IT)
(74) Representative: Sarpi, Maurizio
(86) International application number: PCT/IT2009/000094
(87) International publication number: WO 2009/113121

(56) References cited:
- EP-A2- 1 813 360
- WO-A1-02/28610
- DE-A1- 19 740 842

## Description

The present invention relates to an apparatus that enables recovery of bituminous aggregates and recycling thereof.

Currently, there do not exist on the market apparatuses by means of which it is possible to recover said bituminous aggregates to enable recycling thereof.

As is known from the recent standards, blocks and fragments of road flooring made of bituminous conglomerate deriving from operations of scarification and removal of road surfaces, must be confined in special dumps, being classified as non-dangerous special waste.

The document DE 197 40 842 A1, which is considered as the closest prior art regarding claim 1 discloses an apparatus for recovery of bituminous aggregates of various size and for recycling thereof, comprising in combination:
- mechanical means for separation of the aggregates of larger size from those of smaller size, as well as for washing thereof in an appropriate non-inflammable liquid solvent with specific weight greater than that of water, said solvent being contained in a tank and
- means for recovery of the solvent and recycling thereof in the tank.

There is, therefore, an extreme awareness of the need to recover as much as possible of the bituminous aggregates in order to reduce the costs of confinement of the dump, as well as to recover totally or partially said aggregates for subsequent use.

The purpose of the present invention is to overcome the above problems by providing an easy-to-use apparatus for recovery of bituminous aggregates of various size and recycling thereof at a cost lower than the market price of the re-usable recovered products.

According to the invention this is obtained by providing an apparatus according to claim 1 that may comprise a purposely designed rotary drum or cylindrical chamber, with the bottom part partially immersed in an appropriate non-inflammable liquid solvent or any other chlorinated organic solvent designed to separate the aggregates from the bitumen, having a specific weight greater than that of water.

Said drum separates the bituminous aggregates of larger size from those of smaller size so that they are expelled out of the drum independently of one another.

For said purpose, said drum is equipped with through holes that allow the aggregates of smaller size to exit from the drum itself, said aggregates dropping by gravity, being immersed in said liquid solvent where a screw conveyor pushes them towards a collection chamber, located in which is a second screw conveyor, designed to expel them outwards separated from the bitumen.

The aggregates of larger size, instead, are made to advance by the rotation of the drum until a plurality of expulsion blades are reached, which, being fixed with respect to said drum, are designed to expel them outwards separated from the bitumen.

The non-inflammable liquid solvent, as a result of the rotation of the drum and of the capacity of the solvent itself to bind with organic material, dissolves the bitumen and is bound thereto up to saturation.

A better understanding of the invention will be obtained with reference to the ensuing detailed description and to the attached drawings, which illustrate, purely by way of example, two preferred embodiments thereof.

In the drawings:
Figure 1 is a diagram of a first embodiment of the apparatus forming the subject of the invention;

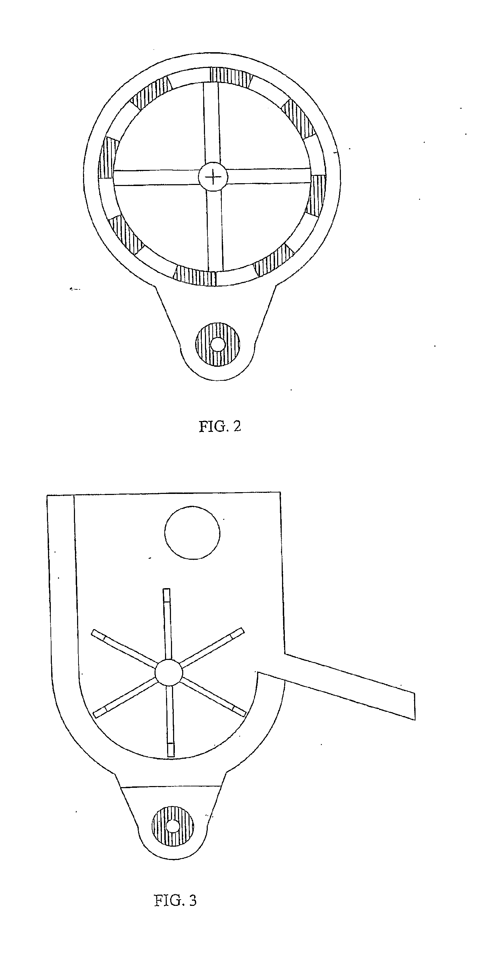

Figures 2 and 3 are cross sections of the rotary drum of the apparatus forming the subject of the invention;

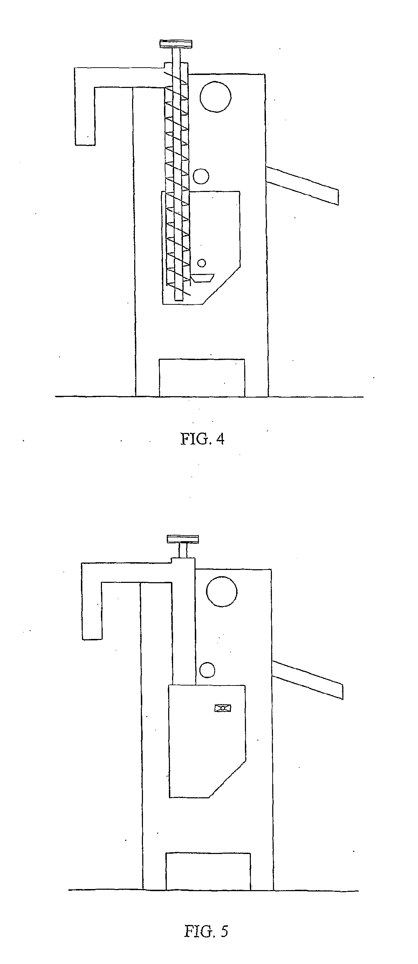

Figures 4 and 5 are cross sections in the proximity of the vertical screw conveyor;
Figure 6A is a diagram of a second embodiment of the apparatus forming the subject of the invention, in which the pre-distillation section has been removed;
Figure 6B shows the pre-distillation section in detail;

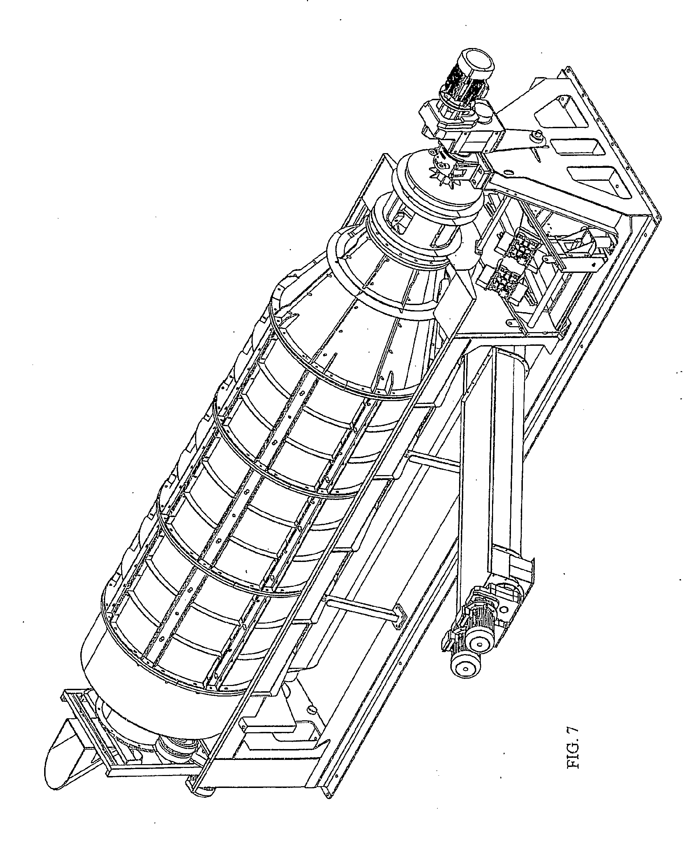

Figure 7 is a perspective view of the rotary drum of the apparatus of Figure 6A;

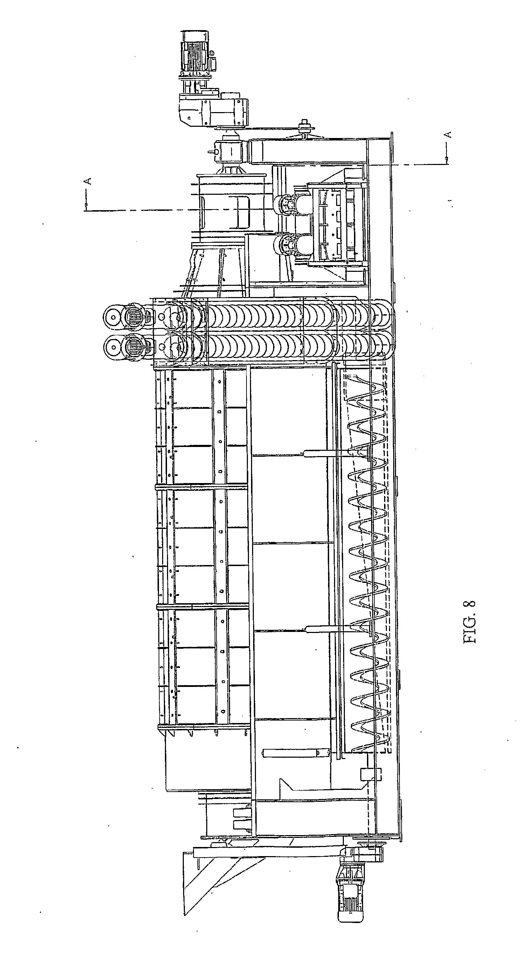

Figure 8 is a partially sectioned side view of the apparatus of Figure 7;

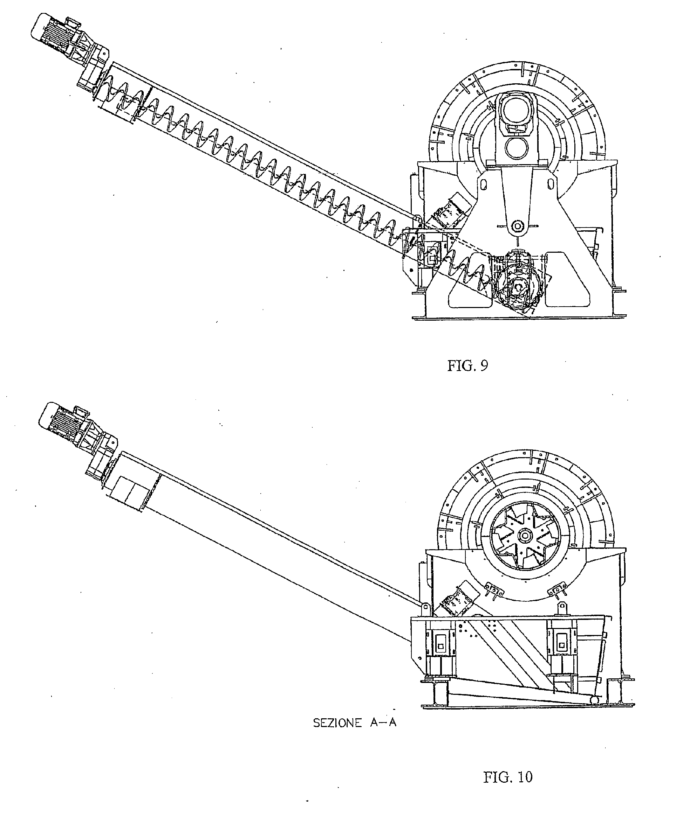

Figure 9 is a partially sectioned front view of the apparatus of Figure 7;
Figure 10 is a cross-sectional view of the apparatus of Figure 7 in the plane of trace A-A;

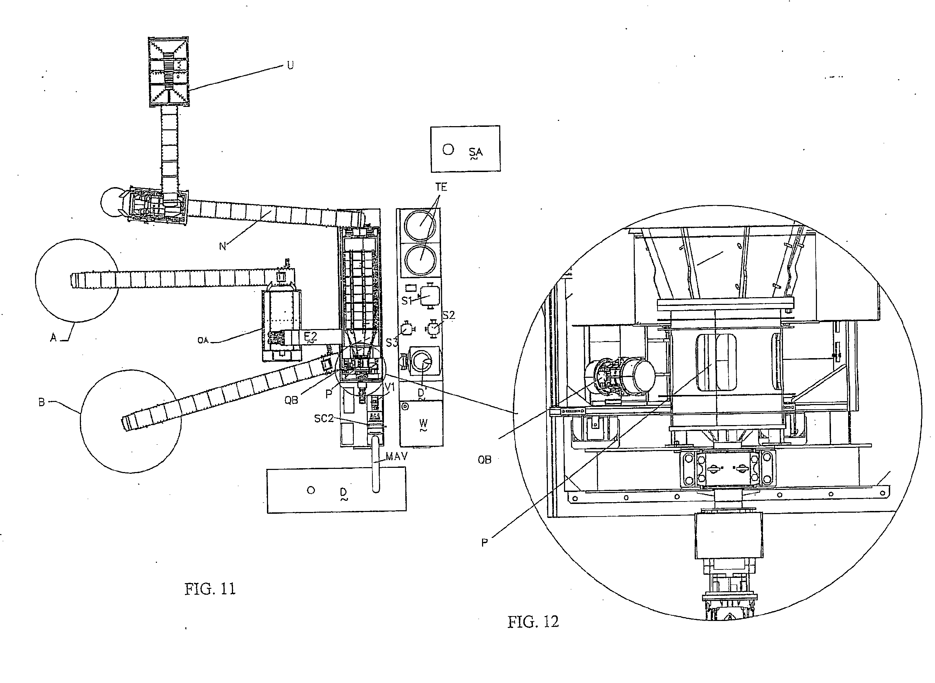

Figure 11 is a top plan view of the plant in which the apparatus of Figure 6A and 6B is inserted; and Figure 12 shows a detail of Figure 11.

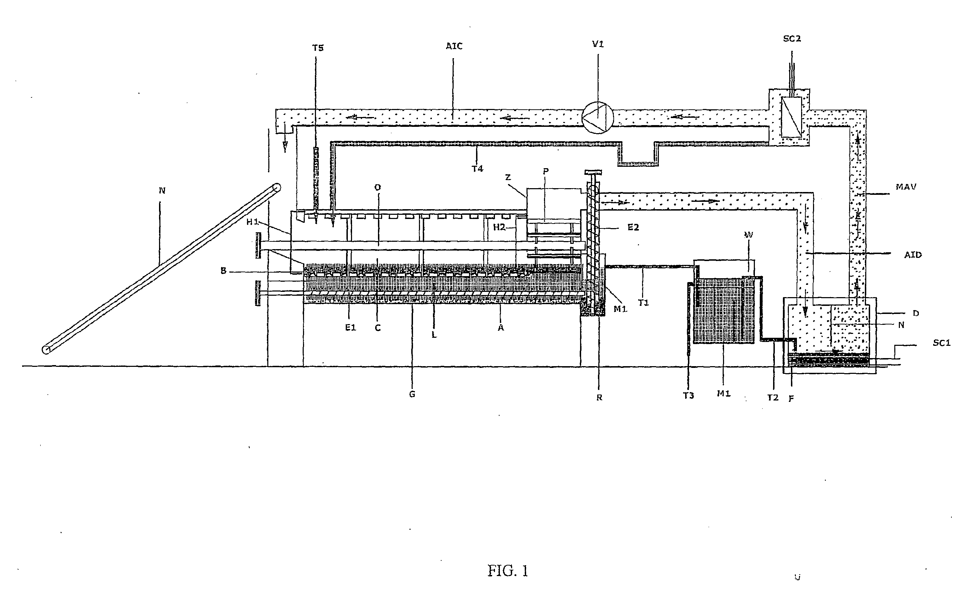

With particular reference to Figure 1, in the preferred embodiment described, an apparatus is provided, designed for recovery of bituminous aggregates of various size and for recycling thereof, which comprises in combination:
- a purposely designed drum or cylindrical chamber C, which is able to turn about its own substantially horizontal axis O; said drum, as has already been mentioned, is partially immersed in an appropriate liquid solvent L contained in an underlying tank G, and is designed to receive, at a first open end H1, the bituminous aggregates for separating the aggregates of smaller size A from those of larger size B; for this purpose, said drum C is equipped with a plurality of through holes made on its wall, which enable the aggregates of smaller size A to exit from the drum C falling by gravity into the tank G to be completely immersed in the liquid solvent L; said liquid solvent is non-inflammable and has a specific weight greater than that of water;
- a plurality of expulsion blades P, at a second open end H2, opposite to the first end H1, which, by turning fixedly with respect to said drum C, are designed to expel the bituminous aggregates of larger size B separated from the bitumen;
- a first screw conveyor E1 with substantially horizontal axis, which, by turning on itself in the lower part of the tank G underlying said drum C, is designed to displace the bituminous aggregates of smaller size A longitudinally, together with a solvent/bitumen mixture M1;
- a collection chamber or well R, which, adjacent to said second end H2 of the rotary drum C, is designed to receive the bituminous aggregates of smaller size A, which are made to advance by the screw conveyor E1, along with the solvent/bitumen mixture M1;
- a second screw conveyor E2 with substantially vertical axis, designed to draw from said well R and to expel the aggregates of smaller size A separated from the bitumen, which are present in the well R itself;
- a distiller D, designed to separate the bitumen from the solvent contained in the mixture M1;
- means of a known type for pumping the bitumen separated from the solvent outwards to be recovered;
- a water separator W, which, connected to the well R and to the distiller D, is designed to separate from the solvent/bitumen mixture M1 coming from said well R the water present in the mixture itself (due to the water absorbed by said bituminous aggregates when these are still in the form of bituminous conglomerate, for example for road flooring), so that the water will be made to exit outwards and the solvent/bitumen mixture M1 without water will be sent into the distiller D;
- means SC2 designed to cool down the vapours of the solvent contained inn a air/vapour mixture MAV of the solvent coming from the distiller D so that the re-condensed solvent will be recovered and re-introduced into the rotary drum C; and
- means V1 for drawing in the air AIC purified from the vapours of the solvent contained in the mixture MAV and introducing it into the rotary drum C.

According to a peculiar characteristic of the invention, the rotary drum C and the tank G are enclosed in a container that is open only at the first open end H1 of the drum itself.

The rotary drum C is equipped with a spiral interrupted in more than one point designed to favour the movement and advance of the bituminous aggregates that are introduced therein.

The liquid solvent L has a low boiling point and in the example that is described is trichloroethylene.

As a result of the rotation of the drum C and of the capacity of the liquid solvent L for binding with organic material, said solvent dissolves the bitumen and binds thereto up to saturation.

The water separator W is connected, respectively, to the well R and to the distiller D by means of a first overflow pipe T1 and a second pipe T2. By means of the first pipe T1 the solvent/bitumen mixture M1 passes from the well R to the separator W, and by means of the second pipe T2 the solvent/bitumen mixture M1 without water passes from said separator W to the distiller D.

According to a further peculiar characteristic of the invention, the first pipe T1 is positioned at such a height as to guarantee that the level of the solvent/bitumen mixture M1 will remain constant. Alternatively, since when working on semitrailers it is not possible to position appropriately said pipe T1, a pump P4 is provided, preferably a magnetically driven one, for drawing said mixture and level switches designed to control said pump to guarantee the right level of the liquid. Said pump P4 is illustrated in the diagram of the second embodiment that will be described hereinafter.

The water that the separator W eliminates from the solvent/bitumen mixture is made to exit by means of a specially provided discharge pipe T3.

The distiller comprises a tank S equipped with a vertical separation wall N and with a tube-nest heat exchanger SC1, positioned on the bottom of the tank S, in which diathermic oil flows at a temperature of approximately 200°C. Said heat exchanger has the task of separating the bitumen from the solvent/bitumen mixture M1 coming from the well R so that the bitumen separated from the solvent and designated in the figure by F comes to position itself on the bottom of the tank S and is rendered fluid by the heat coming from the tube nest.

There are then introduced into the tank S of the distiller D both the solvent/bitumen mixture M1 that comes from the well R and a flow of air AID coming from a conveyor Z located at the second end H2 of the drum C and containing solvent vapours, whilst the air/vapour mixture MAV of the solvent exits from the distiller D itself.

The bitumen F rendered fluid by the tube nest, once it has been recovered on the outside, is subjected to suitable treatments for being re-used, such as for example by mixing it with virgin bitumens or modifying it with polymers.

The means SC2 designed to cool down the vapours of the solvent coming from the distiller D comprise an air/water heat exchanger that functions as cold battery. In fact, the solvent is re-condensed and re-introduced into the rotary drum C by means of a purposely provided pipe for recovery of the solvent T4.

The water for cooling the cold battery SC2 enters at 5°C and exits at 10°C.

The means V1 for aspiration of the vapours of the solvent comprise a centrifugal suction fan.

Advantageously, said suction fan V1 is set downstream of the heat exchanger SC2 to prevent the solvent vapours from possibly damaging it, and provided on the pipe T4 for recovery of the solvent is a siphon that functions as plug to prevent the negative pressure created by the fan V1 from stopping outflow thereof.

The air expelled by the fan V1 is re-introduced into the rotary drum C by means of a pipe positioned at the inlet of the drum itself.

The apparatus also comprises:
- a conveyor belt N designed to introduce bituminous aggregates into said drum C, normally coming from a feeder assembly U;
- means designed to detect saturation of the liquid solvent L and to send a saturation signal when the liquid solvent L reaches a pre-set level of saturation; and
- means designed to receive said saturation signal and to introduce clean solvent L into said rotary drum C.

The conveyor belt N also performs the role of dispenser, being equipped with a plurality of load cells that enable the amount of product to be processed to be kept constant, by regulating the rate thereof.

The means designed to detect saturation of the liquid solvent and send the rotation signal comprise an optical probe that is positioned in the well R and is connected to a PLC.

The means designed to receive the saturation signal and to introduce clean solvent L into the rotary drum C comprise a pump that is connected between a tank for storage of the solvent and a further pipe T5, by means of which the clean solvent L is introduced into the rotary drum C. Said pump is controlled by a level switch to keep the level of solvent in the apparatus constant.

Advantageously, since the apparatus performs a closed cycle, emissions harmful for the atmosphere are not produced.

A further advantage is represented by the fact that the re-condensation of the liquid solvent, which is obtained by means of a cold battery, together with limited use of staff means that the recovery of bituminous aggregates, or special waste, will, as has already been mentioned, have a cost lower than the value of the re-usable recovered products.

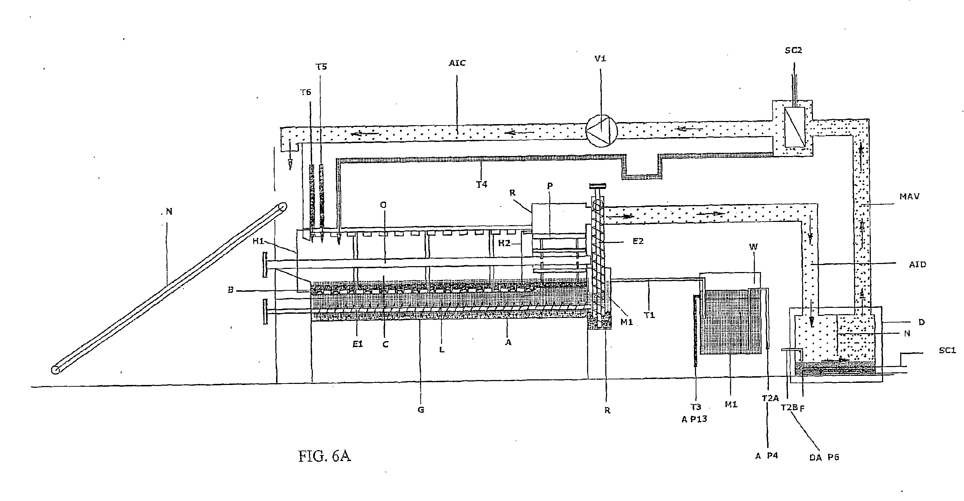

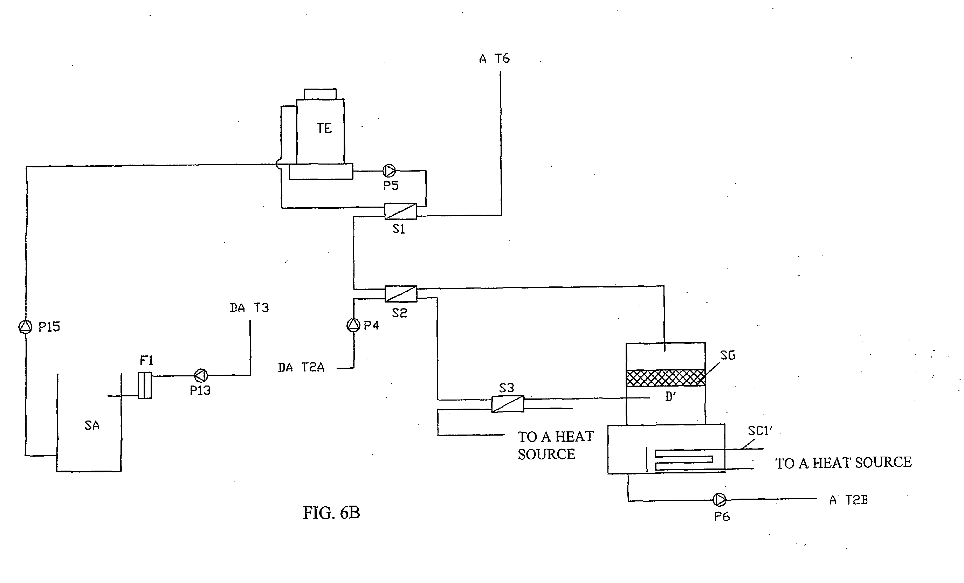

With particular reference to Figures 6A and 6B, provided in a second embodiment of the invention is an apparatus capable of increasing the hourly processing output of bituminous conglomerate preferably up to approximately seventy tonnes.

According to this second embodiment of the invention, the non-inflammable liquid solvent L is a solvent with high boiling point, such as for example perchloroethylene (tetrachloroethylene), and the apparatus that is described comprises a pre-distillation section designed to be connected to the water separator W and to the distiller D, intercepting the pipe T2 in two points T2A and T2B, located, respectively, downstream of said water separator W and upstream of said distiller D, said pre-distillation section comprising:
- a heat exchanger S2, designed to heat the perchloroethylene/bitumen mixture (bringing it from a temperature of approximately 20°C to a temperature of approximately 100°C), which is drawn from the water separator W by means of the pump P4 and introduced into said heat exchanger S2;
- a heat exchanger S3, supplied by a diathermicoil boiler, designed to heat the perchloroethylene/bitumen mixture further (up to 155°C approximately), said mixture exiting from the heat exchanger S2, with the result that said mixture in part evaporates and in part is separated from the bitumen;
- a distillation tower D', which receives at inlet the vapour/perchloroethylene/bitumen mixture coming from the heat exchanger S3 and re-introduces said mixture (140°C approximately) into the heat exchanger S2 so that the mixture that traverses said heat exchanger S2 is heated by the vapour coming from said distillation tower D'; according to a peculiar characteristic of the invention, said distillation tower D', by working at a pressure lower than that of the heat exchanger S3, enables the mixture to continue to evaporate and the liquid part thereof to precipitate towards the bottom of said distillation tower D', where a tube-nest heat exchanger SC1' further separates the bitumen from said mixture, which settles on the bottom and is rendered fluid by the heat coming from the tube nest for being introduced by means of a pump P6 into the distiller D, where the bitumen is completely separated from the perchloroethylene;
- a water-storage tank SA, designed to receive the water that is drawn from the water separator W by means of a pump P13 and introduced into said tank via the pipe T3;
- an evaporative tower TE, designed to cool down the vapour/perchloroethylene mixture that traverses a water/perchloroethylene heat exchanger S1 by means of water that is drawn from said water-storage tank SA by means of a pump P15 and then introduced into the heat exchanger S1 itself (30°C approximately) by means of a pump P5; said evaporative tower TE re-condenses the perchloroethylene and brings it to a temperature of approximately 70°C; the water at outlet from said heat exchanger S1 is re-introduced from the heat exchanger S1 into said evaporative tower TE, whilst the re-condensed liquid perchloroethylene is introduced into the drum C via a pipe T6 that connects said heat exchanger S1 to the drum C.

According to the invention, it is preferable to provide an activated-carbon filter F1 at the inlet of the water tank SA in order to eliminate any possible residue of perchloroethylene bound to the water.

It is moreover preferable for the distillation tower D' to be equipped with a drop-separator SG, designed to cause the drops to drop back onto the tube-nest heat exchanger SC1' in the case of dribbling.

The heat exchanger SC1' of the distillation tower D', the heat exchanger S3, as likewise the heat exchanger SC1 of the distiller D are heated with means of a known type.

In other words, the heat exchanger S2 is traversed by the perchloroethylene/bitumen mixture at room temperature and, in countercurrent, by the perchloroethylene vapours coming from the distillation tower D', which are partially cooled, yielding heat to the mixture at room temperature, thus raising the temperature thereof and hence recovering energy from the system.

Next, the mixture is introduced into the heat exchanger S3, where, thanks to the flow of diathermic oil at high temperature, it evaporates partially and is in part separated from the bitumen.

Then, the vapour/perchloroethylene/bitumen mixture at outlet from the heat exchanger S3 enters the distillation tower D' where, owing to the lower pressure, continues to evaporate whilst the liquid part precipitates into the bottom part of said distillation tower, where the tube nest of the heat exchanger SC1' that is traversed by diathermic oil heats the mixture, which, by evaporation from the perchloroethylene, separates off from the bitumen.

Said bitumen, which is still partially bound to the solvent, is introduced into the distiller D described previously.

The perchloroethylene vapours, after passing through the heat exchanger S2, are introduced into the heat exchanger S1 where, as a result of the cooling caused by traversal of water coming from the evaporative tower TE, the vapour will condense completely, and the liquid perchloroethylene will be re-introduced into the drum C.

Advantageously, according to the invention there are provided, both for the bituminous aggregates of smaller size A and for those of larger size B, respective means QA and QB for drying the perchloroethylene from said bituminous aggregates by vibration, before the latter are collected separately at outlet from the apparatus. Said means are substantially vibrating grizzlies.

In both of the embodiments, it is preferable for the non-inflammable liquid solvent to have a low specific heat so that just a little heat is needed to bring it to boiling point.

The present invention has been described and illustrated according to two preferred embodiments, but it is understood that any person skilled in the branch may make equivalent modifications and/or replacements thereto, without thereby departing from the scope of the claims.

## Claims

1. An apparatus for recovery of bituminous aggregates of various size and for recycling thereof, comprising in combination:
- mechanical means for separation of the aggregates of larger size (B) from those of smaller size (A), as well as for washing thereof in an appropriate non-inflammable liquid solvent (L) with specific weight greater than that of water, said solvent being contained in a tank (G);
- first mechanical means for expulsion of the aggregates of larger size (B) already separated from the bitumen;
- mechanical means for transfer of the aggregates of smaller size (A) and of a solvent/bitumen mixture (M1) from the tank (G) into a collection chamber or well (R);
- second mechanical means for expulsion of the aggregates of smaller size (A) from said well (R);
- means for separation of the bitumen from the solvent and for pumping it out for recovery; and
- means for recovery of the solvent separated from the bitumen and recycling thereof in the tank (G).

2. The apparatus according to the preceding claim, **characterized in that** said mechanical means for separation of the aggregates of larger size (B) comprise a purposely designed rotary drum or cylindrical chamber (C) which turns about its own horizontal axis (O), said drum being partially immersed in an appropriate liquid solvent (L) and contained in a tank (G) underlying the drum itself and being designed to receive at a first open end (H1) the bituminous aggregates for separating the aggregates of smaller size (A) from those of larger size (B); for said purpose said drum (C) being equipped with a plurality of through holes made on its wall that enable said aggregates of smaller size (A) to exit from the drum (C) falling by gravity into the tank (G) to be completely immersed in said liquid solvent (L).

3. The apparatus according to the preceding claim, **characterized in that** said first means for expulsion comprise a plurality of expulsion blades (P), located at a second open end (H2), opposite to the first end (H1), which, by turning fixedly with respect to said drum (C), are designed to expel the bituminous aggregates of larger size (B) separated from the bitumen.

4. The apparatus according to the preceding claim, **characterized in that** said mechanical means for transfer of the aggregates of smaller size (A) comprise a first screw conveyor (E1) with substantially horizontal axis, which, by turning on itself in the lower part of the tank (G), is designed to displace longitudinally the bituminous aggregates of smaller size (A), together with a solvent/bitumen mixture (M1).

5. The apparatus according to the preceding claim, **characterized in that** it further comprises a collection chamber or well (R), which, adjacent to said second end (H2) of the drum (C), is designed to receive the bituminous aggregates of smaller size (A), which are made to advance by the screw conveyor (E1) along with the solvent/bitumen mixture (M1).

6. The apparatus according to the preceding claim, **characterized in that** said second means for expulsion comprise a second screw conveyor (E2) with substantially vertical axis, designed to draw from said well (R) and to expel the aggregates of smaller size (A) separated from the bitumen that are present in the well (R) itself.

7. The apparatus according to the preceding claim, **characterized in that** said means for separation of the bitumen from the solvent comprise a distiller (D), designed to separate the bitumen from the solvent contained in the mixture (M1), and **in that** it further comprises means of a known type for pumping the bitumen separated from the solvent outwards so as to be recovered.

8. The apparatus according to the preceding claim, **characterized in that** it comprises a water separator (W), which, being connected to the well R and to the distiller (D), is designed to separate from the solvent/bitumen mixture (M1) coming from said well (R) the water present in the mixture itself, so that the water will be made to exit outwards and the solvent/bitumen mixture (M1) without water will be sent into the distiller (D).

9. The apparatus according to the preceding claim, **characterized in that** said means for recovery of the solvent (L) comprise means (SC2), designed to cool down the vapours of the solvent of an air/vapour mixture (MAV) of the solvent coming from the distiller (D) so that the solvent will be re-condensed to be recovered and re-introduced into the rotary drum (C).

10. The apparatus according to the preceding claim, **characterized in that** it comprises means (V1) for aspirating air (AIC) purified from the vapours of the solvent that are contained in the mixture (MAV) and introducing it into the rotary drum (C); wherein said rotary drum (C) and the tank (G) are enclosed in a container that is open at the first open end (H1) of the drum itself; said rotary drum (C) being equipped with a spiral interrupted in a number of points designed to favour the movement and advance of the bituminous aggregates that are introduced into the drum itself.

11. The apparatus according to Claim 8, **characterized in that** the water separator (W) is connected to the well (R) and to the distiller (D), respectively, by means of a first overflow pipe (T1) and a second pipe (T2); said first pipe (T1) being designed to enable passage of the solvent/bitumen mixture (M1) from the well (R) to the separator (W) and said second pipe (T2) being designed to enable passage of the solvent/bitumen mixture (M1) without water from said separator (W) to the distiller (D).

12. The apparatus according to the preceding claim, **characterized in that** the first pipe (T1) is positioned at such a height said as to guarantee that the level of the solvent/bitumen mixture (M1) will remain constant, and **in that** the water that the separator (W) eliminates from the solvent/bitumen mixture (M1) is made to exit by means of a specially provided discharge pipe (T3).

13. The apparatus according to Claim 7, **characterized in that** the distiller.(D) comprises a tank (S) equipped with a vertical separation wall (N) and a tube-nest heat exchanger (SC1), designed to separate the bitumen from the solvent/bitumen mixture (M1) coming from the well (R) so that the bitumen separated from the solvent comes to settle on the bottom of the tank (S) and will be rendered fluid by the heat coming from the tube nest; there being introduced into said tank (S) both the solvent/bitumen mixture (M1) that arrives from the well (R) and a flow of air (AID) coming from a conveyor (Z) set at the second end (H2) of the drum (C) and containing solvent vapours, whilst the air/vapour mixture (MAV) of the solvent comes out of the same distiller (D).

14. The apparatus according to the preceding claim, **characterized in that** in said tube-nest heat exchanger there flows diathermic oil at a temperature comprised between 140°C and 200°C, preferably approximately 200°C.

15. The apparatus according to Claim 9, **characterized in that** the means (SC2), designed to cool down the vapours of the solvent coming from the distiller (D) comprise an air/water heat exchanger, designed to function as cold battery; it thus being obtained that the solvent is re-condensed to be re-introduced into the rotary drum (C), wherein the re-condensed solvent is re-introduced into the drum (C) by means of a purposely provided pipe for recovery of the solvent (T4).

16. The apparatus according to Claim 10, **characterized in that** the means (V1) for aspiration of the vapours of the solvent comprise a centrifugal suction fan, which is set downstream of the air/water heat exchanger to prevent the solvent vapours from possibly being damaged.

17. The apparatus according to Claims 15 and 16, **characterized in that** provided on said pipe (T4) for recovery of the solvent is a siphon designed to function as plug to prevent the negative pressure created by the centrifugal suction fan from preventing outflow thereof.

18. The apparatus according to Claim 16, **characterized in that** the air aspirated by the fan (V1) is re-introduced into the rotary drum (C) by means of a pipe positioned at the inlet of the drum itself.

19. The apparatus according to any one of the preceding claims, **characterized in that** it comprises:
- a conveyor belt (N), designed to introduce said bituminous aggregates of various size into said rotary drum (C);
- means designed to detect saturation of the liquid solvent (L) and to send a saturation signal when the liquid solvent (L) reaches a pre-set level of saturation; and
- means designed to receive said saturation signal and to introduce clean liquid solvent (L) into said rotary drum (C).

20. The apparatus according to the preceding claim, **characterized in that** the clean liquid solvent (L) is introduced into the rotary drum (C) by means of a further purposely provided pipe (T5), and **in that** the means designed to detect saturation of the liquid solvent and to send the rotation signal comprise an optical probe; said optical probe being designed to be positioned in the well (R) and connected to a PLC.; wherein the means designed to receive the saturation signal and to introduce clean liquid solvent (L) into the rotary drum (C) comprise a pump; said pump being designed to be connected between a tank for storage of the solvent and said further purposely provided pipe (T5) and being controlled by a level switch to keep the level of solvent constant in the apparatus.

21. The apparatus according to Claim 19, **characterized in that** said conveyor belt (N) is equipped with a plurality of load cells in order to perform the role of dispenser; said load cells keeping the amount of product to be processed constant, regulating the speed of the conveyor belt (N) itself.

22. The apparatus according to any one of the preceding claims, **characterized in that** said liquid solvent (L) is one having a low boiling point, such as trichloroethylene, or any other chlorinated organic solvent.

23. The apparatus according to Claim 12, **characterized in that** it comprises a pre-distillation section, designed to be connected to the water separator (W) and to the distiller (D), intercepting the pipe (T2) in two points (T2A, T2B), respectively downstream of said water separator (W) and upstream of said distiller (D), said pre-distillation section comprising:
- a heat exchanger (S2), designed to heat the mixture of liquid solvent (L) and bitumen that is drawn from the water separator (W) by means of a pump (P4) and introduced into said heat exchanger (S2);
- a heat exchanger (S3), designed to heat further the liquid-solvent/bitumen mixture that exits from the heat exchanger (S2) with the result that said mixture in part evaporates and in part is separated from the bitumen;
- a distillation tower (D'), which receives at inlet the vapour/liquid-solvent/bitumen mixture coming from the heat exchanger (S3) and is designed to re-introduce said mixture into the heat exchanger (S2) so that the mixture that traverses said heat exchanger (S2) is heated by the vapour coming from said distillation tower (D'); said distillation tower (D'), by working at a pressure lower than that of the heat exchanger (S3), enabling the mixture to continue to evaporate and the liquid part to precipitate towards the bottom of said distillation tower (D'), where a tube-nest heat exchanger (SC1') further separates the bitumen from said mixture, which comes to settle on the bottom and is rendered fluid by the heat coming from said tube nest to be introduced into the distiller (D), where the bitumen is separated completely from the perchloroethylene;
- a water-storage tank (SA), designed to receive the water that is drawn from the water separator (W) by means of a pump (P13) and introduced into said tank via the pipe (T3);
- an evaporative tower (TE), designed to cool down the vapour/liquid-solvent mixture that traverses a water/solvent heat exchanger (S1) by means of water that is drawn from a water-storage tank (SA) by means of a pump (P15) and then introduced into said heat exchanger (S1) itself by means of a pump (P5); said evaporative tower (TE) re-condensing the liquid solvent; the water at outlet from said heat exchanger (S1) being re-introduced into said evaporative tower (TE), whilst the re-condensed liquid solvent is introduced into the drum (C) via a pipe (T6), which connects said heat exchanger (S1) to the drum (C).

24. The apparatus according to the preceding claim, **characterized in that** an activated-carbon filter (F1) is provided at the inlet of the water tank (SA) in order to eliminate possible residue of liquid solvent bound to the water, and **in that** it moreover comprises means (QA, QB) for detaching by means of vibration the liquid solvent (L) respectively from the bituminous aggregates of smaller size (A) and from those of larger size (B); wherein the liquid solvent (L) is one having a high boiling point, such as perchloroethylene or tetrachloroethylene.

25. The apparatus according to any one of the preceding claims, **characterized in that** the liquid solvent (L) has a low specific heat.

## Patentansprüche

1. Vorrichtung zum Rückgewinnen von Bitumenzuschlagstoffen von unterschiedlicher Größe und zur ihrem Recyceln, das in Kombination Folgendes umfasst:
- ein mechanisches Mittel zum Trennen der Zuschlagstoffe von größerer Größe (B) von jenen von kleinerer Größe (A) sowie zu ihrem Waschen in einem zweckmäßigen, nicht-entzündlichen, flüssigen Lösemittel (L) mit einem spezifischen Gewicht größer als dem von Wasser, wobei das Lösemittel in einem Tank (G) enthalten ist;
- ein erstes mechanisches Mittel zum Austragen der Zuschlagstoffe von größerer Größe (B), die bereits von dem Bitumen getrennt wurden;
- ein mechanisches Mittel zum Transferieren der Zuschlagstoffe von kleinerer Größe (A) und eines Lösemittel/Bitumen-Gemischs (M1) aus dem Tank (G) in eine Sammelkammer oder ein Becken (R);
- ein zweites mechanisches Mittel zum Austragen der Zuschlagstoffe von kleinerer Größe (A) aus dem Becken (R);
- ein Mittel zum Trennen des Bitumens von dem Lösemittel und zu seinem Auspumpen zum Rückgewinnen; und
- ein Mittel zum Rückgewinnen des Lösemittels, das von dem Bitumen getrennt wurde, und seinem Recyceln in dem Tank (G).

2. Vorrichtung nach dem vorhergehenden Anspruch, **dadurch gekennzeichnet, dass** das mechanische Mittel zum Trennen der Zuschlagstoffe von größerer Größe (B) eine speziell für diesen Zweck ausgebildete Rotationstrommel oder zylindrische Kammer (C) umfasst, die sich um ihre eigene horizontale Achse (0) dreht, wobei die Trommel teilweise in ein zweckmäßiges flüssiges Lösemittel (L) getaucht ist und in einem Tank (G) enthalten ist, der unter der Trommel selbst liegt und dafür eingerichtet ist, an einem ersten offenen Ende (H1) die Bitumenzuschlagstoffe zu empfangen, um die Zuschlagstoffe von kleinerer Größe (A) von jenen von größerer Größe (B) zu trennen; wobei die Trommel (C) für diesen Zweck mit mehreren Durchgangslöchern versehen ist, die in ihrer Wand ausgebildet sind und die es ermöglichen, dass die Zuschlagstoffe von kleinerer Größe (A) die Trommel (C) verlassen und durch Schwerkraft in den Tank (G) fallen, um vollständig in dem flüssigen Lösemittel (L) unterzugehen.

3. Vorrichtung nach dem vorhergehenden Anspruch, **dadurch gekennzeichnet, dass** das erste Mittel zum Austragen mehrere Austragsschaufeln (P) umfasst, die sich an einem zweiten offenen Ende (H2) gegenüber dem ersten Ende (H1) befinden, die, indem sie sich in fixierter Weise mit Bezug auf die Trommel (C) drehen, dafür eingerichtet sind, die Bitumenzuschlagstoffe von größerer Größe (B), die von dem Bitumen getrennt wurden, auszutragen.

4. Vorrichtung nach dem vorhergehenden Anspruch, **dadurch gekennzeichnet, dass** das mechanische Mittel zum Transferieren der Zuschlagstoffe von kleinerer Größe (A) einen ersten Schneckenförderer (E1) mit im Wesentlichen horizontaler Achse umfasst, der, indem er sich im unteren Teil des Tanks (G) um sich selbst dreht, dafür eingerichtet ist, die Bitumenzuschlagstoffe von kleinerer Größe (A), zusammen mit einem Lösemittel/Bitumen-Gemisch (M1), in Längsrichtung zu verdrängen.

5. Vorrichtung nach dem vorhergehenden Anspruch, **dadurch gekennzeichnet, dass** sie des Weiteren eine Sammelkammer oder ein Becken (R) umfasst, die bzw. das, neben dem zweiten Ende (H2) der Trommel (C), dafür eingerichtet ist, die Bitumenzuschlagstoffe von kleinerer Größe (A), die durch den Schneckenförderer (E1) zusammen mit dem Lösemittel/Bitumen-Gemisch (M1) vorangeschoben werden, zu empfangen.

6. Vorrichtung nach dem vorhergehenden Anspruch, **dadurch gekennzeichnet, dass** das zweite Mittel zum Austragen einen zweiten Schneckenförderer (E2) mit einer im Wesentlichen vertikalen Achse umfasst, der dafür eingerichtet ist, die Zuschlagstoffe von kleinerer Größe (A), die von dem Bitumen getrennt wurden und die in dem Becken (R) selbst vorhanden sind, aus dem Becken (R) zu ziehen und auszutragen.

7. Vorrichtung nach dem vorhergehenden Anspruch, **dadurch gekennzeichnet, dass** das Mittel zum Trennen des Bitumens von dem Lösemittel einen Destillator (D) umfasst, der dafür eingerichtet ist, den Bitumen von dem in dem Gemisch (M1) enthaltenen Lösemittel zu trennen, und **dadurch gekennzeichnet, dass** sie des Weiteren ein Mittel eines bekannten Typs umfasst, um den von dem Lösemittel getrennten Bitumen nach draußen zu pumpen, wo er zurückgewonnen wird.

8. Vorrichtung nach dem vorhergehenden Anspruch, **dadurch gekennzeichnet, dass** sie einen Wasserabscheider (W) umfasst, der mit dem Becken R und dem Destillator (D) verbunden und dafür eingerichtet ist, von dem aus dem Becken (R) kommenden Lösemittel/Bitumen-Gemisch (M1) das in dem Gemisch selbst vorhandene Wasser zu trennen, so dass das Wasser veranlasst wird, nach außen auszutreten, und das Lösemittel/Bitumen-Gemisch (M1) ohne Wasser wird zu dem Destillator (D) geleitet.

9. Vorrichtung nach dem vorhergehenden Anspruch, **dadurch gekennzeichnet, dass** das Mittel zum Rückgewinnen des Lösemittels (L) ein Mittel (SC2) umfasst, das dafür eingerichtet ist, die Dämpfe des Lösemittels eines Luft/Dampf-Gemisches (MAV) des aus dem Destillator (D) kommenden Lösemittels abzukühlen, so dass das Lösemittel rekondensiert, um zurückgewonnen und erneut in die Rotationstrommel (C) eingeleitet zu werden.

10. Vorrichtung nach dem vorhergehenden Anspruch, **dadurch gekennzeichnet, dass** sie ein Mittel (V1) umfasst, um Luft (AIC) anzusaugen, die aus den Dämpfen des Lösemittels, die in dem Gemisch (MAV) enthalten sind, gereinigt wurde, und sie in die Rotationstrommel (C) einzuleiten; wobei die Rotationstrommel (C) und der Tank (G) in einem Behälter umschlossen sind, der an dem ersten offenen Ende (H1) der Trommel selbst offen ist; wobei die Rotationstrommel (C) mit einer Spirale versehen ist, die an einer Anzahl von Punkten unterbrochen ist und dafür eingerichtet ist, die Bewegung und den Vorschub der Bitumenzuschlagstoffe, die in die Trommel selbst eingeleitet werden, zu begünstigen.

11. Vorrichtung nach Anspruch 8, **dadurch gekennzeichnet, dass** der Wasserabscheider (W) über ein erstes Überlaufrohr (T1) und ein zweites Rohr (T2) mit dem Becken (R) bzw. dem Destillator (D) verbunden ist; wobei das erste Rohr (T1) dafür eingerichtet ist, das Fließen des Lösemittel/Bitumen-Gemischs (M1) aus dem Becken (R) zu dem Abscheider (W) zu ermöglichen und das zweite Rohr (T2) dafür eingerichtet ist, das Fließen des Lösemittel/Bitumen-Gemischs (M1) ohne Wasser von dem Abscheider (W) zu dem Destillator (D) zu ermöglichen.

12. Vorrichtung nach dem vorhergehenden Anspruch, **dadurch gekennzeichnet, dass** das erste Rohr (T1) in einer solchen Höhe positioniert ist, dass sichergestellt ist, dass der Füllstand des Lösemittel/Bitumen-Gemischs (M1) konstant bleibt, und **dadurch gekennzeichnet, dass** das Wasser, das der Abscheider (W) aus dem Lösemittel/Bitumen-Gemisch (M1) entfernt, veranlasst wird, über ein speziell bereitgestelltes Abflussrohr (T3) auszutreten.

13. Vorrichtung nach Anspruch 7, **dadurch gekennzeichnet, dass** der Destillator (D) einen Tank (S) umfasst, der mit einer vertikalen Trennwand (N) und einem Röhrennestwärmetauscher (SC1) ausgestattet ist, und dafür eingerichtet ist, den Bitumen von dem aus dem Becken (R) kommenden Lösemittel/Bitumen-Gemisch (M1) zu trennen, so dass der von dem Lösemittel getrennte Bitumen sich am Boden des Tanks (S) absetzt und durch die von dem Röhrennest kommende Wärme verflüssigt wird; wobei in den Tank (S) sowohl das Lösemittel/Bitumen-Gemisch (M1), das aus dem Becken (R) ankommt, als auch ein Luftstrom (AID), der aus einem Förderer (Z) kommt, der sich am zweiten Ende (H2) der Trommel (C) befindet und Lösemitteldämpfe enthält, eingeleitet wird, während das Luft/DampfGemisch (MAV) des Lösemittels aus demselben Destillator (D) kommt.

14. Vorrichtung nach dem vorhergehenden Anspruch, **dadurch gekennzeichnet, dass** in dem Röhrennestwärmetauscher diathermisches Öl bei einer Temperatur zwischen 140 °C und 200 °C, bevorzugt etwa 200 °C, fließt.

15. Vorrichtung nach Anspruch 9, **dadurch gekennzeichnet, dass** das Mittel (SC2), das dafür eingerichtet ist, die Dämpfe des aus dem Destillator (D) kommenden Lösemittels abzukühlen, einen Luft/Wasser-Wärmetauscher umfasst, der dafür eingerichtet ist, als eine Kältebatterie zu fungieren; wodurch bewirkt wird, dass das Lösemittel rekondensiert wird, um erneut in die Rotationstrommel (C) eingeleitet zu werden, wobei das rekondensierte Lösemittel über ein speziell bereitgestelltes Rohr (T4) in die Trommel (C) zurückgeführt wird, um das Lösemittel zurückzugewinnen.

16. Vorrichtung nach Anspruch 10, **dadurch gekennzeichnet, dass** das Mittel (V1) zum Ansaugen der Dämpfe der Lösemittel ein Zentrifugalsauggebläse umfasst, das stromabwärts des Luft/Wasser-Wärmetauschers angeordnet ist, um zu verhindern, dass die Lösemitteldämpfe möglicherweise beschädigt werden.

17. Vorrichtung nach den Ansprüchen 15 und 16, **dadurch gekennzeichnet, dass** an dem Rohr (T4) zum Rückgewinnen des Lösemittels ein Siphon angeordnet ist, der dafür eingerichtet ist, als ein Verschluss zu fungieren, um zu verhindern, dass der durch das Zentrifugalsauggebläse erzeugte Unterdruck dessen Abfließen verhindert.

18. Vorrichtung nach Anspruch 16, **dadurch gekennzeichnet, dass** die durch das Gebläse (V1) abgesaugte Luft über ein Rohr, das am Einlass der Trommel selbst positioniert ist, in die Rotationstrommel (C) zurückgeleitet wird.

19. Vorrichtung nach einem der vorhergehenden Ansprüche, **dadurch gekennzeichnet, dass** sie Folgendes umfasst:
- ein Förderband (N), das dafür eingerichtet ist, die Bitumenzuschlagstoffe von unterschiedlicher Größe in die Rotationstrommel (C) einzuleiten;
- ein Mittel, das dafür eingerichtet ist, die Sättigung des flüssigen Lösemittels (L) zu detektieren und ein Sättigungssignal zu senden, wenn das flüssige Lösemittel (L) einen voreingestellten Sättigungsgrad erreicht; und
- ein Mittel, das dafür eingerichtet ist, das Sättigungssignal zu empfangen und sauberes flüssiges Lösemittel (L) in die Rotationstrommel (C) einzuleiten.

20. Vorrichtung nach dem vorhergehenden Anspruch, **dadurch gekennzeichnet, dass** das saubere flüssige Lösemittel (L) über ein weiteres speziell bereitgestelltes Rohr (T5) in die Rotationstrommel (C) eingeleitet wird, und **dadurch gekennzeichnet, dass** das Mittel, das dafür eingerichtet ist, die Sättigung des flüssigen Lösemittels zu detektieren und das Rotationssignal zu senden, eine optische Sonde umfasst; wobei die optische Sonde dafür eingerichtet ist, in dem Becken (R) positioniert zu werden und mit einer PLC verbunden zu werden; wobei das Mittel, das dafür eingerichtet ist, das Sättigungssignal zu empfangen und sauberes flüssiges Lösemittel (L) in die Rotationstrommel (C) einzuleiten, eine Pumpe umfasst; wobei die Pumpe dafür eingerichtet ist, zwischen einem Tank zum Speichers des Lösemittels und dem weiteren speziell bereitgestellten Rohr (T5) verbunden zu werden und durch einen Füllstandsschalter gesteuert zu werden, um den Füllstand des Lösemittels in der Vorrichtung konstant zu halten.

21. Vorrichtung nach Anspruch 19, **dadurch gekennzeichnet, dass** das Förderband (N) mit mehreren Kraftmessdosen ausgestattet ist, um die Rolle eines Verteilers auszuüben; wobei die Kraftmessdosen die Menge des zu verarbeitenden Produkts konstant halten und die Geschwindigkeit des Förderbandes (N) selbst regeln.

22. Vorrichtung nach einem der vorhergehenden Ansprüche, **dadurch gekennzeichnet, dass** das flüssige Lösemittel (L) eines mit einem niedrigen Siedepunkt ist, wie zum Beispiel Trichlorethylen oder ein anderes chloriertes organisches Lösemittel.

23. Vorrichtung nach Anspruch 12, **dadurch gekennzeichnet, dass** sie eine Vordestillationssektion umfasst, die dafür eingerichtet ist, mit dem Wasserabscheider (W) und mit dem Destillator (D) verbunden zu werden und das Rohr (T2) an zwei Punkten (T2A, T2B), stromabwärts des Wasserabscheiders (W) bzw. stromaufwärts des Destillators (D), anzuzapfen, wobei die Vordestillationssektion Folgendes umfasst:
- einen Wärmetauscher (S2), der dafür eingerichtet ist, das Gemisch aus flüssigem Lösemittel (L) und Bitumen, das aus dem Wasserabscheider (W) mittels einer Pumpe (P4) abgezogen und in den Wärmetauscher (S2) eingeleitet wird, zu erwärmen;
- einen Wärmetauscher (S3), der dafür eingerichtet ist, das Gemisch aus flüssigem Lösemittel/Bitumen, das den Wärmetauscher (S2) verlässt, weiter zu erwärmen, mit dem Ergebnis, dass das Gemisch teilweise verdampft und teilweise aus dem Bitumen abgetrennt wird;
- einen Destillationsturm (D'), der am Einlass das aus dem Wärmetauscher (S3) kommende Gemisch aus Dampf/flüssigem Lösemittel/Bitumen empfängt und dafür eingerichtet ist, das Gemisch zurück in den Wärmetauscher (S2) zu leiten, so dass das Gemisch, das den Wärmetauscher (S2) durchquert, durch den aus dem Destillationsturm (D') kommenden Dampf erwärmt wird; wobei der Destillationsturm (D') es dadurch, dass er mit einem Druck unterhalb des Drucks des Wärmetauschers (S3) arbeitet, ermöglicht, dass das Gemisch weiterhin verdampfen kann und der flüssige Teil in Richtung des Bodens des Destillationsturms (D') ausfällen kann, wo ein Röhrennestwärmetauscher (SC1') den Bitumen weiter von dem Gemisch trennt, so dass er sich auf dem Boden absetzt und durch die von dem Röhrennest kommende Wärme verflüssigt wird, um in den Destillator (D) eingeleitet zu werden, wo der Bitumen vollständig von dem Perchlorethylen getrennt wird;
- einen Wasserspeichertank (SA), der dafür eingerichtet ist, das Wasser zu empfangen, das aus dem Wasserabscheider (W) mittels einer Pumpe (P13) abgezogen und in den Tank über das Rohr (T3) eingeleitet wird;
- einen Verdampfungsturm (TE), der dafür eingerichtet ist, das Gemisch aus Dampf/flüssigem Lösemittel, das einen Wasser/Lösemittel-Wärmetauscher (S1) durchquert, mittels Wasser abzukühlen, das mittels einer Pumpe (P15) aus einem Wasserspeichertank (SA) abgezogen und dann mittels einer Pumpe (P5) in den Wärmetauscher (S1) selbst eingeleitet wird; wobei der Verdampfungsturm (TE) das flüssige Lösemittel rekondensiert; wobei das Wasser am Auslass des Wärmetauschers (S1) zurück in den Verdampfungsturm (TE) geleitet wird, während das rekondensierte flüssige Lösemittel über ein Rohr (T6), das den Wärmetauscher (S1) mit der Trommel (C) verbindet, in die Trommel (C) eingeleitet wird.

24. Vorrichtung nach dem vorhergehenden Anspruch, **dadurch gekennzeichnet, dass** ein Aktivkohlefilter (F1) am Einlass des Wassertanks (SA) angeordnet ist, um mögliche Rückstände von flüssigem Lösemittel zu beseitigen, das an das Wasser gebunden ist, und **dadurch gekennzeichnet, dass** sie darüber hinaus ein Mittel (QA, QB) umfasst, um mittels Vibration das flüssige Lösemittel (L) von den Bitumenzuschlagstoffen von kleinerer Größe (A) bzw. von jenen von größerer Größe (B) abzutrennen; wobei das flüssige Lösemittel (L) eines mit einem hohen Siedepunkt ist, wie zum Beispiel Perchlorethylen oder Tetrachlorethylen.

25. Vorrichtung nach einem der vorhergehenden Ansprüche, **dadurch gekennzeichnet, dass** das flüssige Lösemittel (L) eine geringe spezifische Wärme hat.

## Revendications

1. Dispositif pour la récupération d'agrégats bitumeux de différente taille et pour leur recyclage, comprenant en combinaison :
- des moyens mécaniques pour la séparation des agrégats de plus grande taille (B) de ceux de plus petite taille (A), ainsi que pour leur lavage dans un solvant liquide non inflammable approprié (L) avec un poids spécifique supérieur à celui de l'eau, ledit solvant étant contenu dans un réservoir (G) ;
- des premiers moyens mécaniques pour l'expulsion des agrégats de plus grande taille (B) déjà séparés du bitume ;
- des moyens mécaniques pour le transfert des agrégats de plus petite taille (A) et d'un mélange solvant/bitume (M1) du réservoir (G) dans une chambre de collecte ou puits (R) ;
- des deuxièmes moyens mécaniques pour l'expulsion des agrégats de plus petite taille (A) dudit puits (R) ;
- des moyens pour la séparation du bitume par rapport au solvant et pour son pompage pour la récupération ; et
- des moyens pour la récupération du solvant séparé du bitume et son recyclage dans le réservoir (G).

2. Dispositif selon la revendication précédente, **caractérisé en ce que** lesdits moyens mécaniques pour la séparation des agrégats de plus grande taille (B) comprennent une chambre cylindrique ou tambour rotatif conçu dans ce but spécifique (C) qui tourne autour de son propre axe horizontal (0), ledit tambour étant partiellement immergé dans un solvant liquide approprié (L) et contenu dans un réservoir (G) situé sous le tambour lui-même et étant conçu pour recevoir les agrégats bitumeux au niveau d'une première extrémité ouverte (H1) pour séparer les agrégats de plus petite taille (A) de ceux de plus grande taille (B) ; pour ledit but spécifique, ledit tambour (C) étant équipé d'une pluralité de trous passants réalisés sur sa paroi, qui permettent auxdits agrégats de plus petite taille (A) de sortir du tambour (C) en tombant par gravité dans le réservoir (G) pour être complètement immergés dans ledit solvant liquide (L).

3. Dispositif selon la revendication précédente, **caractérisé en ce que** lesdits premiers moyens pour l'expulsion comprennent une pluralité d'aubes d'expulsion (P), situées au niveau d'une deuxième extrémité ouverte (H2), opposée à la première extrémité (H1), qui, en tournant solidairement par rapport audit tambour (C), sont conçues pour expulser les agrégats bitumeux de plus grande taille (B) séparés du bitume.

4. Dispositif selon la revendication précédente, **caractérisé en ce que** lesdits moyens mécaniques pour le transfert des agrégats de plus petite taille (A) comprennent un premier convoyeur à vis (E1) avec axe sensiblement horizontal, lequel, en tournant sur lui-même dans la partie inférieur du réservoir (G), est conçu pour déplacer longitudinalement les agrégats bitumeux de plus petite taille (A), conjointement à un mélange solvant/bitume (M1).

5. Dispositif selon la revendication précédente, **caractérisé en ce qu'**il comprend en outre une chambre de collecte ou puits (R) qui, adjacent à ladite deuxième extrémité (H2) du tambour (C), est conçu pour recevoir les agrégats bitumeux de plus petite taille (A), qui sont déplacés en avant par le convoyeur à vis (E1) conjointement au mélange solvant/bitume (M1).

6. Dispositif selon la revendication précédente, **caractérisé en ce que** lesdits deuxièmes moyens pour l'expulsion comprennent un deuxième convoyeur à vis (E2) avec axe sensiblement vertical, conçu pour tirer dudit puits (R) et pour expulser les agrégats de plus petite taille (A) séparés du bitume qui sont présents dans le puits (R) lui-même.

7. Dispositif selon la revendication précédente, **caractérisé en ce que** lesdits moyens pour la séparation du bitume par rapport au solvant comprennent un distillateur (D), conçu pour séparer le bitume du solvant contenu dans le mélange (M1), et **en ce qu'**il comprend en outre des moyens d'un type connu pour pomper le bitume séparé du solvant vers l'extérieur de manière à être récupéré.

8. Dispositif selon la revendication précédente, **caractérisé en ce qu'**il comprend un séparateur d'eau (W) qui, étant relié au puits R et au distillateur (D), est conçu pour séparer du mélange solvant/bitume (M1) provenant dudit puits (R) l'eau présente dans le mélange lui-même, de sorte que l'eau sera amenée à sortir à l'extérieur et le mélange solvant/bitume (M1) sans eau sera envoyé au distillateur (D).

9. Dispositif selon la revendication précédente, **caractérisé en ce que** lesdits moyens pour la récupération du solvant (L) comprennent des moyens (SC2), conçus pour refroidir les vapeurs du solvant d'un mélange air/vapeur (MAV) du solvant provenant du distillateur (D) de sorte que le solvant sera à nouveau condensé pour être récupéré et réintroduit dans le tambour rotatif (C).

10. Dispositif selon la revendication précédente, **caractérisé en ce qu'**il comprend de moyens (V1) pour aspirer de l'air (AIC) purifié à partir des vapeurs du solvant qui sont contenues dans le mélange (MAV) et l'introduire dans le tambour rotatif (C) ; dans lequel ledit tambour rotatif (C) et le réservoir (G) sont enfermés dans un conteneur qui est ouvert au niveau de la première extrémité ouverte (H1) du tambour lui-même ; ledit tambour rotatif (C) étant équipé d'une spirale interrompue en une pluralité de points conçue pour favoriser le mouvement et l'avance des agrégats bitumeux qui sont introduits dans le tambour lui-même.

11. Dispositif selon la revendication 8, **caractérisé en ce que** le séparateur d'eau (W) est relié au puits (R) et au distillateur (D) respectivement au moyen d'un premier tube de trop-plein (T1) et d'un deuxième tube (T2) ; ledit premier tube (T1) étant conçu pour permettre le passage du mélange solvant/bitume (M1) du puits (R) au séparateur (W) et ledit deuxième tube (T2) étant conçu pour permettre le passage du mélange solvant/bitume (M1) sans eau dudit séparateur (W) au distillateur (D).

12. Dispositif selon la revendication précédente, **caractérisé en ce que** le premier tube (T1) est positionné à une hauteur telle qu'elle garantisse que le niveau du mélange solvant/bitume (M1) restera constant, et **en ce que** l'eau que le séparateur (W) élimine du mélange solvant/bitume (M1) est amenée à sortir au moyen d'un tube de décharge disposé spécialement (T3).

13. Dispositif selon la revendication 7, **caractérisé en ce que** le distillateur (D) comprend un réservoir (S) équipé d'une paroi de séparation verticale (N) et un échangeur de chaleur à faisceau tubulaire (SC1), conçu pour séparer le bitume du mélange solvant/bitume (M1) provenant du puits (R) de manière que le bitume séparé du solvant vienne se déposer sur le fond du réservoir (S) et sera rendu fluide par la chaleur provenant du faisceau tubulaire ; dans ledit réservoir (S) étant introduits à la fois le mélange solvant/bitume (M1) qui arrive du puits (R) et un flux d'air (AID) provenant d'un convoyeur (Z) installé au niveau de la deuxième extrémité (H2) du tambour (C) et contenant des vapeurs de solvant, alors que le mélange air/vapeur (MAV) du solvant sort du même distillateur (D).

14. Dispositif selon la revendication précédente, **caractérisé en ce que** dans ledit échangeur de chaleur à faisceau tubulaire circule de l'huile diathermique à une température comprise entre 140°C et 200°C, de préférence approximativement 200°C.

15. Dispositif selon la revendication 9, **caractérisé en ce que** les moyens (SC2), conçus pour refroidir les vapeurs du solvant provenant du distillateur (D), comprennent un échangeur de chaleur air/eau, conçu pour fonctionner comme une batterie froide ; étant obtenu ainsi que le solvant soit à nouveau condensé pour être réintroduit dans le tambour rotatif (C), dans lequel le solvant à nouveau condensé est réintroduit dans le tambour (C) au moyen d'un tube disposé dans ce but spécifique pour la récupération du solvant (T4).

16. Dispositif selon la revendication 10, **caractérisé en ce que** les moyens (V1) pour l'aspiration des vapeurs du solvant comprennent un ventilateur centrifuge d'aspiration, qui est installé en aval de l'échangeur de chaleur air/eau pour empêcher les vapeurs de solvant d'être éventuellement détériorées.

17. Dispositif selon les revendications 15 et 16, **caractérisé en ce que**, sur ledit tube (T4) pour la récupération du solvant est disposé un siphon conçu pour fonctionner comme un bouchon pour empêcher la pression négative créée par le ventilateur centrifuge d'aspiration d'empêcher la sortie de celui-ci.

18. Dispositif selon la revendication 16, **caractérisé en ce que** l'air aspiré par le ventilateur (V1) est réintroduit dans le tambour rotatif (C) au moyen d'un tube positionné à l'entrée du tambour lui-même.

19. Dispositif selon l'une quelconque des revendications précédentes, **caractérisé en ce qu'**il comprend :
- un convoyeur à bande (N), conçu pour introduire lesdits agrégats bitumeux de différente taille dans ledit tambour rotatif (C) ;
- des moyens conçus pour détecter une saturation du solvant liquide (L) et pour transmettre un signal de saturation quand le solvant liquide (L) atteint un niveau prédéterminé de saturation ; et
- des moyens conçus pour recevoir ledit signal de saturation et pour introduire du solvant liquide propre (L) dans ledit tambour rotatif (C).

20. Dispositif selon la revendication précédente, **caractérisé en ce que** le solvant liquide propre (L) est introduit dans le tambour rotatif (C) au moyen d'un autre tube disposé dans ce but spécifique (T5) et **en ce que** les moyens conçus pour détecter la saturation du solvant liquide et pour transmettre le signal de rotation comprennent une sonde optique ; ladite sonde optique étant conçue pour être positionnée dans le puits (R) et connectée à un PLC ; dans lequel les moyens conçus pour recevoir le signal de saturation et pour introduire du solvant liquide propre (L) dans le tambour rotatif (C) comprennent une pompe ; ladite pompe étant conçue pour être connectée entre un réservoir pour le stockage du solvant et ledit autre tube disposé dans ce but spécifique (T5) et étant commandée par un commutateur de niveau pour maintenir le niveau de solvant constant dans le dispositif.

21. Dispositif selon la revendication 19, **caractérisé en ce que** ledit convoyeur à bande (N) est équipé d'une pluralité de capteurs de charge de manière à remplir la fonction de distributeur ; lesdits capteurs de charge maintenant constante la quantité de produit à traiter, en régulant la vitesse du convoyeur à bande (N) lui-même.

22. Dispositif selon l'une quelconque des revendications précédentes, **caractérisé en ce que** ledit solvant liquide (L) est un solvant ayant un point d'ébullition bas, tel quel le trichloréthylène ou n'importe quel autre solvant organique chloré.

23. Dispositif selon la revendication 12, **caractérisé en ce qu'**il comprend une section de pré-distillation, conçue pour être connectée au séparateur d'eau (W) et au distillateur (D), en interceptant le tube (T2) en deux points (T2A, T2B), respectivement en aval dudit séparateur d'eau (W) et en amont dudit distillateur (D), ladite section de pré-distillation comprenant :
- un échangeur de chaleur (S2), conçu pour chauffer le mélange de solvant liquide (L) et de bitume qui est soutiré du séparateur d'eau (W) au moyen d'une pompe (P4) et introduit dans ledit échangeur de chaleur (S2) ;
- un échangeur de chaleur (S3), conçu pour chauffer ultérieurement le mélange de solvant liquide/bitume qui sort de l'échangeur de chaleur (S2) avec pour résultat que ledit mélange en partie évapore et en partie est séparé du bitume ;
- une tour de distillation (D'), qui reçoit en entrée le mélange vapeur/solvant liquide/bitume provenant de l'échangeur de chaleur (S3) et est conçu pour réintroduire ledit mélange dans l'échangeur de chaleur (S2) de manière que le mélange qui traverse ledit échangeur de chaleur (S2) soit chauffé par la vapeur provenant de ladite tour de distillation (D') ; ladite tour de distillation (D'), en fonctionnant à une pression inférieure à celle de l'échangeur de chaleur (S3), permettant au mélange de continuer à évaporer et à la partie liquide de précipiter vers le fond de ladite tour de distillation (D'), où un échangeur de chaleur à faisceau tubulaire (SC1') sépare ultérieurement le bitume dudit mélange, qui vient se déposer sur le fond et est rendu fluide par la chaleur provenant dudit faisceau tubulaire pour être introduit dans le distillateur (D), où le bitume est séparé complètement du perchloréthylène ;
- un réservoir de stockage d'eau (SA), conçu pour recevoir l'eau qui est soutirée du séparateur d'eau (W) au moyen d'une pompe (P13) et introduite dans ledit réservoir via le tube (T3) ;
- une tour à évaporation (TE), conçue pour refroidir le mélange vapeur/solvant liquide qui traverse un échangeur de chaleur eau/solvant (S1) au moyen d'eau qui est soutirée d'un réservoir de stockage d'eau (SA) au moyen d'une pompe (P15) et introduit ensuite dans ledit échangeur de chaleur (S1) lui-même au moyen d'une pompe (P5) ; ladite tour à évaporation (TE) condensant à nouveau le solvant liquide ; l'eau à la sortie dudit échangeur de chaleur (S1) étant réintroduite dans ladite tour à évaporation (TE), alors que le solvant liquide à nouveau condensé est introduit dans le tambour (C) via un tube (T6), qui relie ledit échangeur de chaleur (S1) au tambour (C).

24. Dispositif selon la revendication précédente, **caractérisé en ce qu'**un filtre à charbon actif (F1) est disposé à l'entrée du réservoir d'eau (SA) de manière à éliminer d'éventuels résidus de solvant liquide lié à l'eau, et **en ce qu'**il comprend par ailleurs des moyens (QA, QB) pour détacher par vibration le solvant liquide (L) respectivement des agrégats bitumeux de plus petite taille (A) et de ceux de plus grande taille (B) ; dans lequel le solvant liquide (L) est un solvant ayant un point d'ébullition élevé, tel quel le perchloréthylène ou le tétrachloréthylène.

25. Dispositif selon l'une quelconque des revendications précédentes, **caractérisé en ce que** le solvant liquide (L) a une basse chaleur massique.
